# EUROPÄISCHE PATENTSCHRIFT

(11) **EP 2 100 351 B1**
(45) Veröffentlichungstag und Bekanntmachung des Hinweises auf die Patenterteilung: **13.04.2011**
(21) Anmeldenummer: 07846930.1
(22) Anmeldetag: 30.11.2007
(51) Int. Cl.: H02B 1/21

(54) **SCHALTSCHRANKANORDNUNG**
Electrical cabinet arrangement
DISPOSITIF D'ARMOIRE DE COMMANDE

(30) Priorität: 12.12.2006 DE 102006058778
(43) Veröffentlichungstag der Anmeldung: 16.09.2009
(73) Patentinhaber: RITTAL GmbH & Co. KG, 35745 Herborn (DE)
(72) Erfinder: SCHELL, Michael, 35687 Dillenburg (DE); BECKER, Tobias, 35398 Lützellinden (DE)
(74) Vertreter: Fleck, Hermann-Josef
(86) Internationale Anmeldenummer: PCT/EP2007/010440
(87) Internationale Veröffentlichungsnummer: WO 2008/071313

(56) Entgegenhaltungen:
- US-A- 2 319 415
- US-A- 3 168 683
- US-A- 3 469 149
- US-A- 3 710 198

## Beschreibung

Die Erfindung bezieht sich auf eine Schaltschrankanordnung mit mindestens einem Schaltschrank, der mittels Wandabschnitte in mehrere quaderförmige Teilräume einschließlich Funktionsräumen unterteilt oder unterteilbar ist, wozu vertikale Wandabschnitte mit horizontaler Unterteilung vorgesehen sind, und bei dem zur Stromführung eine Sammelschienenanordnung einschließlich einer Verteilschienenanordnung vorhanden ist, um Gerätekomponenten elektrische Energie zuzuführen, die in den von der Frontseite her zugänglichen Funktionsräumen angeordnet sind, wobei Verteilsammelschienen der Verteilschienenanordnung durch mehrere vertikal übereinander angeordnete und durch horizontale Raumteilerböden voneinander getrennte Funktionsräume geführt und in deren Innenraum montiert und berührungssicher abgedeckt sind.

Eine Schaltschrankanordnung dieser Art ist in der US 3,710,198 A angegeben. Bei dieser bekannten Schaltschrankanordnung verlaufen im hinteren Schaltschrankbereich vertikale Sammelschienen, die mittels isolierender Wandabschnitte getrennt sind. Auf Trageböden sind quaderförmige Teilräume angeordnet.

Ähnliche Schaltschrankanordnungen mit quaderförmigen Teilräumen und Verteilschienenanordnung zeigen auch die US 3,469,149 A, die US 2,319,415 A und die US 3,168,683 A.

Eine weitere Schaltschrankanordnung mit einem Schaltschrank, dessen Innenraum in mehrere Teilräume unterteilt ist, ist in der DE 10 2004 054 173 A1 angegeben. Bei diesem bekannten Schaltschrank ist ein von vorne zum Einbau von elektrischen Geräten zugänglicher Geräteraum mittels vertikaler Trennwände von einem seitlich daneben angeordneten Kabelanschlussraum und einem dahinter im rückwärtigen Bereich des Schaltschrankinnenraums angeordneten Sammelschienenraum getrennt. Die so in einem horizontalen Querschnitt voneinander getrennten Teilräume verlaufen über die gesamte Höhe des Schaltschrankinnenraums. Der Geräteraum ist von dem Sammelschienenraum mittels einer Trennwand getrennt, die einen vertikalen vorderen und einen davon beabstandeten vertikalen hinteren Wandabschnitt aufweist, wobei der vordere Wandabschnitt und der hintere Abschnitt in unterschiedlich hohe, durch horizontale Trennlinie getrennte Teilabschnitte unterteilt sind. Zwischen dem vorderen und dem hinteren Wandabschnitt sind vertikale Verteilschienen geführt, an die über Durchbrüche mittels Anschlusssteckfahnen Einschübe zur elektrischen Kontaktierung anschließbar sind. Eine andere Raumaufteilung des Schaltschrankinnenraums ist, abgesehen von unterschiedlichen Schrankhöhen, nicht näher dargestellt.

Die DE 40 13 379 C1 zeigt eine Schaltschrankanordnung mit einem Schaltschrank, bei dem der Innenraum in mehrere horizontal übereinander angeordnete Teilräume in verschiedener Weise aufteilbar ist, wobei über eine elektrische Energieversorgung von Einbaugeräten keine näheren Ausführungen gemacht sind.

Der Erfindung liegt die Aufgabe zugrunde, eine Schaltschrankanordnung der eingangs genannten Art bereitzustellen, die mit möglichst wenig Montageaufwand unterschiedliche Innenraumaufteilungen ermöglicht, wobei auch ein einfacher Aufbau der Energieversorgungseinrichtung bei guter Zugänglichkeit erhalten wird.

Diese Aufgabe wird mit den Merkmalen des Anspruches 1 gelöst. Hierbei ist vorgesehen, dass Verteilsammelschienen der Verteilschienenanordnung durch mehrere vertikal übereinander angeordnete und durch horizontale Raumteilerböden voneinander getrennte Funktionsräume geführt und in deren Innenraum montiert und berührungssicher abgedeckt sind, dass im rückwärtigen Randbereich der Raumteilerböden Ausschnitte angeordnet sind, durch die die Verteilsammelschienen geführt sind, und dass die Ausschnitte an die Ausdehnung des Bereiches der Verteilsammelschienen in Breiten- und Tiefenrichtung samt berührungssicherer Abdeckung angepasst sind.

Mit diesen Maßnahmen werden dem Anwender verschiedene Funktionsräume für den Einbau von Gerätekomponenten mit gut zugänglicher Energieversorgung bereitgestellt, wobei sich eine einfache Montage ergibt, und insbesondere auch ein Aufbau für Niederspannungsanlagen geboten wird. Die elektrisch zu versorgenden Gerätekomponenten können leicht und variabel positioniert werden.

Für den Aufbau und die Montage sind dabei die Maßnahmen von Vorteil, dass die Funktionsräume als Montageplatten ausgebildete Rückwände aufweisen, die von einer Rückwand des betreffenden Schaltschrankes beabstandet sind, um im hinteren Innenraumbereich des Schaltschrankes einen Aufnahmeraum für eine Hauptschienenanordnung der Sammelschienenanordnung zu bilden, in dem Hauptsammelschienen montiert sind, die mit den Verteilsammelschienen elektrisch verbunden sind.

Die Variabilität der Raumaufteilung wird dadurch begünstigt, dass gleich oder verschieden hohe Montageplatten vorgesehen sind, deren Abmessung in Höhe und Breite an die Höhe und Breite der Funktionsräume angepasst sind.

Der Aufbau der Funktionsräume wird des Weiteren dadurch begünstigt, dass die Teilräume seitlich von an die Funktionsraumhöhe angepassten Seitenwandabschnitten abgeschlossen sind.

Die Montage und Installation werden auch dadurch begünstigt, dass die Verteilschienenanordnung in einem wannenartigen Träger mit entlang der vertikalen Ränder verlaufenden Haltestegen aufgenommen und mit horizontal verlaufenden Sammelschienenhaltern festgelegt sind und dass die von vorne aufgesetzten Abdeckungen mit Schnappelemente aufweisenden Seitenteilen an den Haltestegen arretiert sind.

Weitere vorteilhafte Maßnahmen für den Aufbau und die Montage bestehen darin, dass die Verbindung zwischen den Hauptsammelschienen und den Verteilsammelschienen mittels lamellierter Kupferschienen und Anschlussklemmen, mittels Bolzen oder mittels flexibler Leiter und Anschlussklemmen hergestellt ist, dass Montageplatten mit Aussparungen für die Durchführung der Kupferschienen oder flexiblen Leiter vorgesehen sind und dass die Aussparungen mittels Kabeltüllen oder Isolierstoff verschlossen sind.

Weitere Montagevorteile mit variablen Gestaltungsmöglichkeiten ergeben sich dadurch, dass zur Aufnahme der Raumteilerböden seitlich in Tiefenrichtung verlaufende Montagewinkel mittels vertikaler Schenkel an den vertikalen Rahmenschenkeln und/oder den Seitenwandabschnitten und gegebenenfalls an vertikalen Montageschienen angebracht sind, wobei die Raumteilerböden auf horizontalen gegeneinander gerichteten Schenkeln zweier in gleicher Höhe sich gegenüberliegender Montagewinkel angebracht sind.

Der Einbau wird dabei dadurch begünstigt, dass die horizontalen Schenkel der Montagewinkel über die gegeneinander gerichteten Innenseiten der vorderen vertikalen Rahmenschenkel nach innen vorragen und dass die Breite der Raumteilerböden höchstens dem lichten Abstand der Innenseiten der vorderen vertikalen Rahmenschenkel entspricht.

Der modulartige Aufbau unterschiedlich großer und/oder unterschiedlich angeordneter Funktionsräume wird auch dadurch begünstigt, dass die Funktionsräume frontseitig mit an ihre Höhe angepassten Teiltüren versehen sind und/oder dass eine sich über alle Funktionsräume frontseitig erstreckende Fronttür angebracht ist.

Eine einfache und eindeutige Montage wird dadurch unterstützt, dass die Höhen der Seitenwandabschnitte, der Montageplatten und gegebenenfalls der Teiltüren auf ein Rastermaß von Befestigungslochreihen der vertikalen Rahmenschenkel und/oder der vertikalen Montageschienen abgestimmt sind.

Die Erfindung wird nachfolgend anhand von Ausführungsbeispielen unter Bezugnahme auf die Zeichnungen näher erläutert. Es zeigen:
- Fig. 1: eine Schaltschrankanordnung mit abgenommenen Türen und teilweise abgenommenen Wandelementen mit mehreren Funktionsräumen in perspektivischer Ansicht,
- Fig. 2A und 2B: eine Schaltschrankanordnung mit einem Schaltschrank mit mehreren durch vertikale Trennwände gebildeten Teilräumen in Draufsicht und mit mehreren horizontal abgetrennten Teilräumen in Frontansicht mit Teiltüren,
- Fig. 3: eine gläserne Darstellung eines Schaltschrankes mit horizontal getrenn- ten Teilräumen, einem Verteilschienensystem und daran angeschlos- senen Gerätekomponenten in perspektivischer Ansicht,
- Fig. 4: die Ausführung nach Fig. 3 in Frontansicht,
- Fig. 5: die Ausführung nach Fig. 3 in Draufsicht,
- Fig. 6: einen Ausschnitt eines Schaltschrankes mit mehreren horizontal von- einander getrennten Funktionsräumen in perspektivischer Vorderan- sicht mit Verteilschienensystem,
- Fig. 7: einen Ausschnitt eines Schaltschrankes in einem Eckbereich eines Teil- raumes in Form eines Funktionsraumes in perspektivischer Ansicht,
- Fig. 8: einen Seitenwandbereich eines Schaltschrankes von innen mit seitli- chen Wandabschnitten,
- Fig. 9: einen Seitenwandbereich eines Schaltschrankes mit einem gelösten Seitenwandabschnitt in perspektivischer Ansicht,
- Fig. 10: zwei unterschiedlich hohe Seitenwandabschnitte in perspektivischer Ansicht und einen vergrößerten Ausschnitt eines Seitenwandabschnit- tes in dessen Eckbereich,
- Fig. 11: eine Teil-Montageplatte in perspektivischer Ansicht,
- Fig. 12: eine Teiltür in perspektivischer Ansicht,
- Fig. 13: einen Montagewinkel in perspektivischer Ansicht,
- Fig. 14: einen Raumteilerboden in perspektivischer Ansicht,
- Fig. 15: einen Abschnitt eines Trennstegs in perspektivischer Ansicht,
- Fig. 16: ausschnittsweise einen Aufbau für eine Sammelschienenanordnung einer Hauptschienenanordnung und/oder einer Verteilschienenanord- nung in perspektivischer Ansicht,
- Fig. 17: einen Sammelschienenträger und eine Sammelschienenabdeckung ausschnittsweise in auseinander gezogener perspektivischer Ansicht,
- Fig. 18: eine Stützblende für eine Sammelschienenanordnung nach Fig. 16,
- Fig. 19: einen Einzelträger einer Sammelschiene mit Einzelabdeckung und
- Fig. 20: einen horizontalen Querschnitt einer Schaltschrankanordnung in der Ebene eines Funktionsraumes.

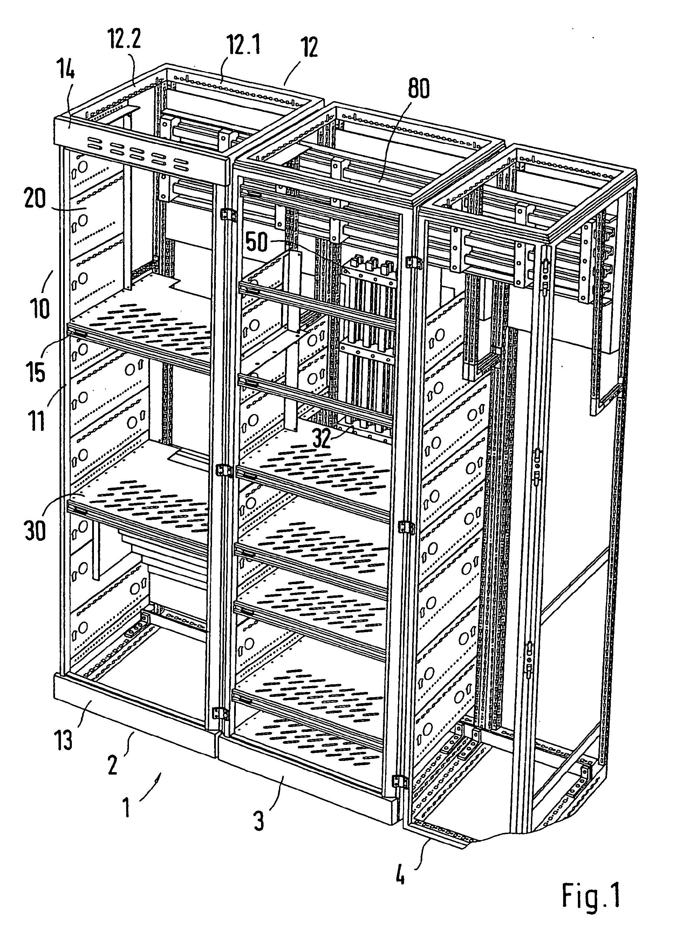

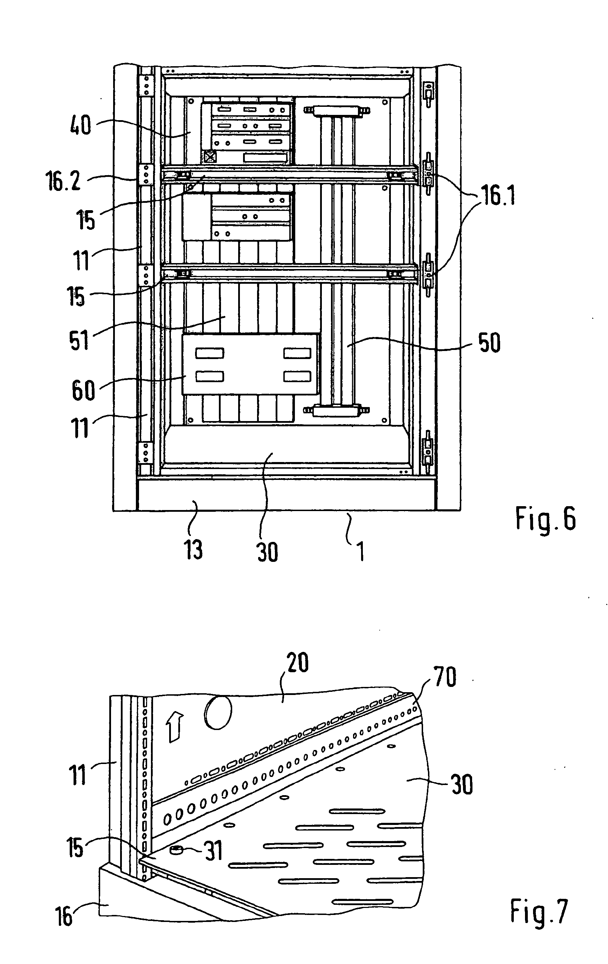

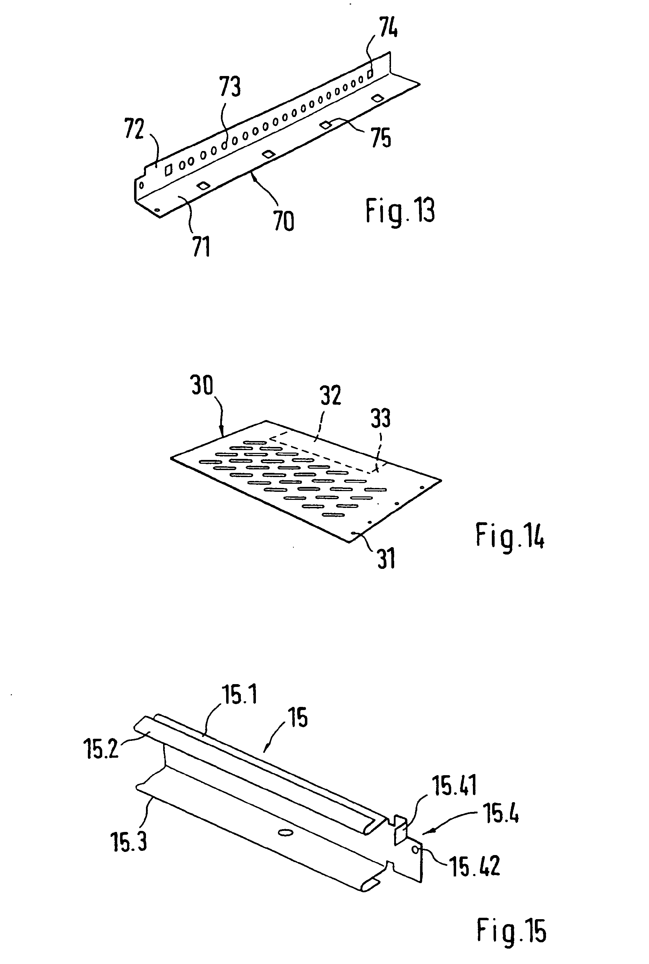

Fig. 1 zeigt eine Schaltschrankanordnung 1 mit mehreren mit ihren jeweiligen Rahmengestellen seitlich aneinander gereihten Schaltschränken 2, 3, 4, wobei der rechte Schaltschrank eine gegenüber den beiden anderen Schaltschränken 2, 3 geringere Breite besitzt und lediglich einen von unten bis oben durchgehenden Innenraum aufweist, während die beiden anderen Schaltschränke 2, 3 mehrere horizontal übereinander liegende Teilräume 5 in Form von Funktionsräumen unterschiedlicher Höhe aufweisen. Im rückwärtigen Bereich der Schaltschrankanordnung 1 ist ein Hauptschienensystem mit mehreren horizontal verlaufenden Stromschienen angeordnet, während in dem mittleren Schaltschrank 3 vertikale Verteilschienen angeordnet sind, die an die Hauptschienen mittels elektrisch leitender, in den Stromführungseigenschaften angepasster Verbindungselemente angeschlossen sind. Die Verteilschienen verlaufen senkrecht durch mehrere Funktionsräume und sind auf der Vorderseite von Rückwandabschnitten in Form von den Funktionsräumen zugeordneten Montageplatten 40 mittels entsprechender Sammelschienenhalter montiert und vom Innenraum der Funktionsräume aus zugänglich. Auf den Verteilschienen sind entsprechende Geräteadapter für den Anschluss von Gerätekomponenten kontaktierend aufgesetzt. Zwischenräume zwischen den Geräteadaptern sind mittels isolierender Abdeckungen berührungssicher zum Innenraum der Funktionsräume hin verschlossen. Die Verteilschienen verlaufen durch mehrere übereinander angeordnete Funktionsräume, wobei im hinteren Bereich von horizontalen Raumteilerböden 30 (vgl. auch Fig. 6 und 14) entsprechende Ausschnitte 32 vorgesehen sind, die an die Ausdehnung der Verteilschienen mit Abdeckungen angepasst sind.

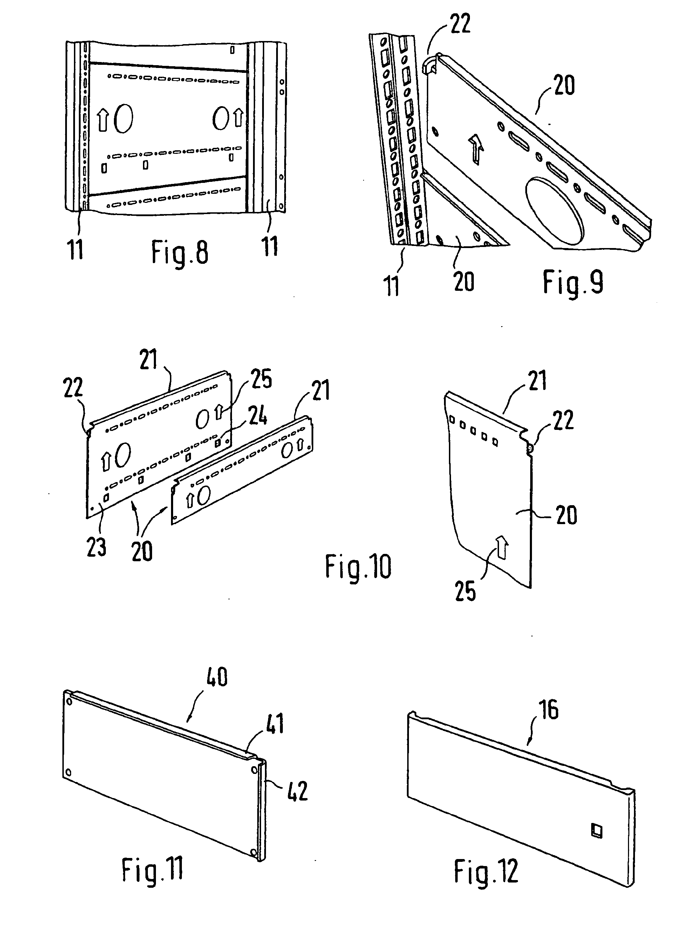

Ferner zeigt Fig. 1, dass die Schaltschränke 2, 3, 4 Rahmengestelle 10 mit vier in den Eckbereichen angeordneten vertikalen Rahmenschenkeln 11 und Deckrahmen mit in Breitenrichtung und Tiefenrichtung verlaufenden Rahmenschenkeln 12.1 bzw. 12.2 aufweisen. Ferner sind die Schaltschränke 2, 3, 4 mit jeweiligen Sockeln 13 versehen. Im Bereich des vorderen Randes der Raumteilerböden 30 sind im Querschnitt U-förmige Trennstege 15 angeordnet, deren Öffnungsseiten nach vorn gerichtet sind, wobei die freien Enden der Seitenschenkel 15.1, 15.3 bündig sind mit den vorderen Rändern der vertikalen Rahmenschenkel 11 bzw. der Frontebene des Rahmengestells 10. Auf der Vorderseite des Deckrahmens 12 ist eine obere Frontblende 14 angebracht. Zum Verschließen der Frontseite der Schaltschränke ist entweder eine von oben bis unten durchgehende Fronttür oder es sind den jeweiligen Funktionsräumen zugeordnete und in der Höhe angepasste Teiltüren 16 (vgl. Fig. 12) vorgesehen, die an jeweiligen, an den vertikalen Rahmenschenkeln 11 angebrachten Scharnierteilen 16.1 mit komplementären Scharnierteilen gelenkig gelagert und an jeweils zugeordneten, an den gegenüberliegenden vertikalen Rahmenschenkeln 11 angeordneten Verschlussteilen 16.2 getrennt verschließbar sind.

Die horizontal übereinander liegenden Teilräume 5 in Form der Funktionsräume sind seitlich mit an die Höhe der Funktionsräume angepassten Seitenwandabschnitten 20 begrenzt, die mit ihrem vorderen vertikalen Randbereich an den dortigen vertikalen Rahmenschenkeln 11 und an ihrem hinteren vertikalen Randbereich entweder an den hinteren vertikalen Rahmenschenkeln 11 oder an vertikalen Montageschenkeln angebracht sind, die in der Ebene der Rückwandabschnitte der Funktionsräume angeordnet sind. Zusätzlich zu den die Funktionsräume seitlich begrenzenden Seitenwandabschnitten 20 sind die betreffenden Schaltschränke 2 bzw. 4 mit durchgehenden äußeren Seitenwänden abgeschlossen, ebenso wie auch die Rückseite der Schrankanordnung 1 sowie deren Oberseite.

Die Seitenwände 20 sind an ihrem oberen Randbereich zunächst unter stumpfem Winkel schräg nach innen und oben bezüglich des Funktionsraums und dann wiederum nach außen und oben parallel zu dem oberen Rand abgewinkelt, wie auch die Fig. 9 und 10 erkennen lassen. Im oberen Eckbereich ist ein nach außen von der Ebene des Seitenwandabschnittes 20 vorstehendes abgebogenes Hakenelement 22 angeordnet, das an die Länge von vertikal gerichteten Langlöchern in dem betreffenden vertikalen Rahmenschenkel 11 bzw. Montageschenkel angepasst und in diesen mit einer nach unten zeigenden Haltenase einhängbar ist. Dabei ist vorzugsweise vorgesehen, dass die vertikalen Rahmenschenkel 11 eine den vorderen Rahmenbereich des Rahmengestells 10 umgrenzende innere seitliche Montageebene und eine davon von der Frontseite abgekehrt liegende zur Seite nach außen abgesetzte, ebenfalls zur Innenseite der Rahmenschenkel 11 gekehrte äußere seitiche Montageebene aufweisen, wobei sowohl die innere als auch die äußere Montageebene der vertikalen Rahmenschenkel 11 Befestigungslochreihen aufweisen. Die Seitenwandabschnitte 20 sind mit den Hakenelementen vorzugsweise in der äußeren, seitlich zurückversetzten Montageebene eingehängt, wobei auch der vertikale Montageschenkel eine entsprechende Befestigungslochreihe in der entsprechenden Ebene aufweist. Zusätzlich zu den Hakenelementen 22 sind im unteren vorderen und hinteren Eckbereich der Seitenwandabschnitte 20 Befestigungslöcher angeordnet, die sich mit Befestigungsöffnungen in den vertikalen Rahmenschenkeln 11 bzw. den betreffenden vertikalen Montageschenkeln decken und zum Sichern eine Schraubverbindung ermöglichen. Zudem weisen die Seitenwandabschnitte 20 an ihrem unteren Randbereich 23 und gegebenenfalls auch in ihrem oberen Randbereich 21 bzw. oberen Abschnitt eine horizontal verlaufende Lochanordnung 24 auf. Zur richtigen Orientierung mit dem in der genannten Weise abgebogenen oberen Rand nach oben sind die Seitenwandabschnitte 20 jeweils mit Ausrichtmarken 25 in Form eines nach oben gerichteten Pfeils versehen. Ferner weisen sie eine mittels einer abnehmbaren Platte abgedeckte oder an einer Perforierung ausbrechbare Öffnung für eine seitliche Zugänglichkeit z. B. in einen daneben angeordneten Kabelraum auf. Die Seitenwandabschnitte 20 sind in ihrer Höhe an die Höhe eines Funktionsraumes vorzugsweise in einem bestimmten Rastermaß, insbesondere entsprechend ganzzahligen Vielfachen von Höheneinheiten HE angepasst. Dabei können Seitenwandabschnitte 20 unterschiedlicher Höhe vorgesehen sein, um unterschiedlich hohe Funktionsräume zu bilden.

Entsprechend sind auch die Höhen der Teil-Montageplatten 40 und der Teiltüren 16 in einem bestimmten Rasterabstand, insbesondere entsprechend ganzzahligen Vielfachen von Höheneinheiten an die Höhe von Funktionsräumen angepasst, so dass sich eine Art Baukastensystem zum Aufbau gewünschter Funktionsräume ergibt, die entsprechend den Lochreihen und deren Raster in den vertikalen Rahmenschenkeln 11 sowie den vertikalen Montageschenkeln auch in unterschiedlichen Höhen des Schaltschrankinnenraums anordenbar sind.

Zum Anordnen der Raumteilerböden 30 sind seitlich an den Seitenwandabschnitten 20 und/oder den vertikalen Rahmenschenkeln 11 bzw. den vertikalen Montageschienen anbringbare Montagewinkel 70 vorgesehen, die mit einem vertikalen Schenkel 72 entlang dem betreffenden Seitenwandabschnitt 20 verlaufen und mit ihrem horizontalen Schenkel 71 zum Inneren des Schrankraumes vorstehen, wobei zwei sich gegenüberliegende horizontale Schenkel 71 einen Raumteilerboden 30 auf ihrer Oberseite aufnehmen, der mittels in Öffnungen einer Lochreihe 73 bzw. einer Lochanordnung 31 (vgl. Fig. 13 und 14) eingreifender Elemente, insbesondere Schrauben verbindbar ist. Die horizontalen Schenkel 71 stehen dabei über die innere Montageebene der vertikalen Rahmenschenkel 11 in den Innenraum vor und die Ausdehnung des Raumteilerbodens 30 in Breitenrichtung ist vorteilhafterweise höchstens so breit bemessen, wie der Abstand zweier sich gegenüberliegender innerer Montageebenen, so dass der Raumteilerboden 30 ohne Schwierigkeiten in den Schaltschrankinnenraum eingeführt und an den Montagewinkeln 70 festgelegt werden kann, wobei auch der Ausschnitt 32 relativ zu den Verteilschienen passend positioniert ist.

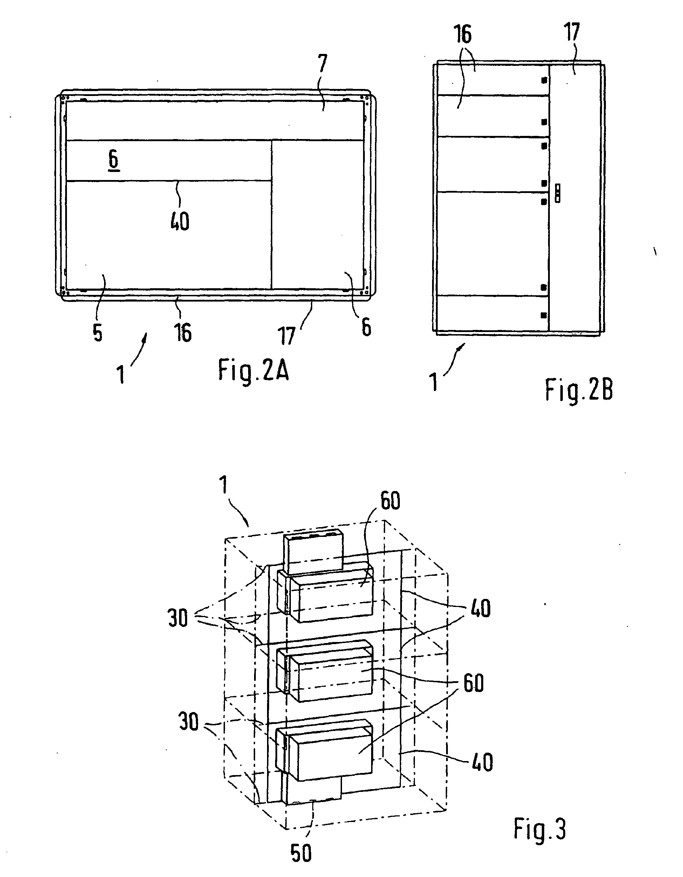

Die Fig. 2A und 2B zeigen Raumeinteilungsmöglichkeiten des Innenraums eines Schaltschranks zum einen in horizontaler Richtung durch Vertikaltrennwände und zum anderen in vertikaler Richtung durch die horizontalen Raumteilerböden 30.

Die Fig. 3, 4, 5 lassen die Verteilschienenanordnung 50 mit Sammelschienenabdeckung 51 und auf die Verteilschienenanordnung 50 aufgesetzten Geräteadaptern 52 sowie daran angeschlossenen Schaltgeräten 60 erkennen. Auch Fig. 6 lässt die durch mehrere Funktionsräume verlaufende Anordnung der Verteilschienen 50 und ihre Durchführung durch die Ausschnitte 32 im hinteren Bereich der Raumteilerböden 30 erkennen. Wie Fig. 14 zeigt, kann der Ausschnitt 32 mittels einer Perforierung 33 im hinteren Randbereich des Raumteilerbodens 30 zum einfachen Ausbrechen vorbereitet sein, wobei der Ausschnitt 32 zum hinteren Rand des Raumteilerbodens 30 offen ist, so dass auch dadurch der Raumteilerboden 30 ohne Weiteres nachträglich in beliebiger Höhe des Schaltschrankinnenraumes angeordnet und auch wieder herausgenommen werden kann, ohne die Verteilschienenanordnung 50 entfernen zu müssen.

Wie die Fig. 13 erkennen lässt, kann der Montagewinkel 70 mittels Befestigungslöchern 74, 75 und gegebenenfalls zur Seite auf der vom Innenraum abgekehrten Rückseite ausgebogener hakenförmiger Laschen an dem betreffenden Seitenwandabschnitt in deren Lochanordnung 24 eingehängt bzw. mit diesem verbunden werden.

Wie Fig. 15 zeigt, besitzen die U-förmigen Trennstege 15 in Verlängerung ihres Grundsteges 15.2 seitliche Befestigungsabschnitte 15.4 (auf beiden Seiten), die im eingebauten Zustand Absätze an den vertikalen Rahmenschenkeln 11 auf deren Rückseite hintergreifen und mittels durch Befestigungsöffnungen eingeführter Schrauben von der Rückseite befestigt werden. Außerdem können im Eckbereich der Befestigungsabschnitte 15.4 Freibereiche und zurückgebogene Halteelemente 15.41 gebildet sein.

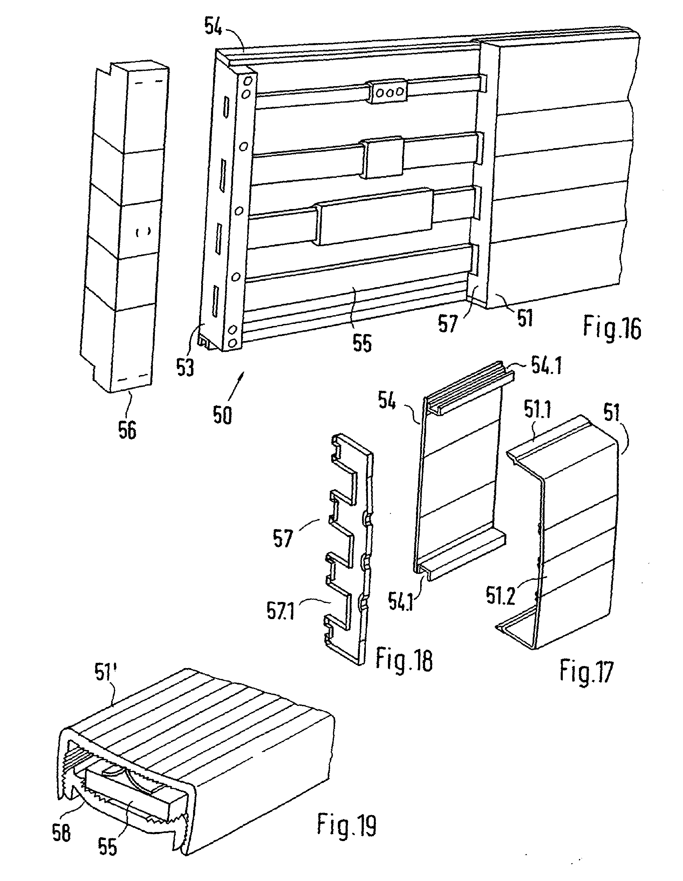

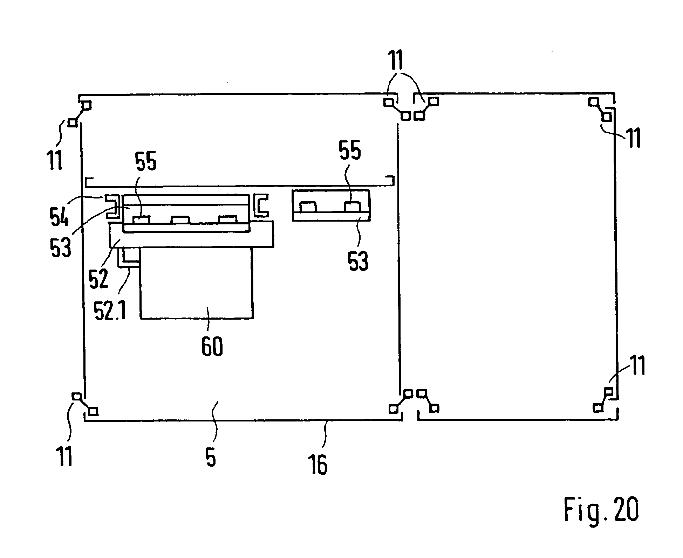

Fig. 16 zeigt eine Sammelschienenanordnung, beispielsweise die Verteilschienenanordnung 50 (vgl. Fig. 20), wobei der Aufbau in ähnlicher Weise auch für eine Hauptschienenanordnung 80 (vgl. Fig. 1) Anwendung finden kann. Die Sammelschienen, vorliegend also die Verteilschienen 55, sind in einem wannenförmigen, im Querschnitt U-förmigen Sammelschienenträger 54 mit einem entsprechend der Anordnung der Sammelschienen relativ breit ausgedehnten Bodenteil und im Vergleich dazu relativ niedrigen Rändern aufgenommen. Die Ränder sind als Haltestege 54.1 mit Haltestrukturen ausgestaltet, um daran die sich über die ganze Breite des Sammelschienenträgers 54 erstreckende Abdeckung 51 mit entsprechenden Gegenstrukturen aufzuschnappen bzw. aufzurasten, wobei die Verteilschienen 55 mittels eines Deckelteils 51.2 abgedeckt und die Gegenstrukturen an an dem Deckelteil seitlich vorstehenden Seitenteilen 51.1 angeformt sind.

Auf diese Weise wird eine isolierende, berührungssichere Abdeckung der Sammelschienen bzw. Verteilschienen 55 erhalten, die z. B. an Freibereiche zwischen auf die Sammelschienen aufgesetzten Adaptern angepasst werden kann. Um auch frontseitig in dem Bereich zwischen dem Deckelteil 51.2 der Abdeckung 51 und den Sammelschienen sowie dem Bodenteil des Sammelschienenträgers eine Abdichtung und auch eine Abstützung im Endbereich der Abdeckung 51 zu erhalten, ist dort eine Stützblende 57 vorgesehen, die an den Querschnitt des Raums zwischen der Abdeckung und dem Sammelschienenträger angepasst und mit Ausnehmungen 57.1 für die Sammelschienen versehen ist, wie die Fig. 16 und 18 zeigen. Die Stützblende 57 besitzt in ihrem der Unterseite der Abdeckung 51 zugekehrten Randbereich Haltenuten, die mit Vorsprüngen an der Unterseite der Abdeckung 51 fixierend zusammenwirken.

Die Sammelschienen sind in dem wannenartigen Sammelschienenträger 54 mittels darin eingesetzter und festgelegter Sammelschienenhalter 53 angebracht, wobei die Sammelschienenhalter 53 einen Unterteil mit Ausnehmungen für die Sammelschienen 55 und einen darauf aufsetzbaren und mit Schrauben fixierbaren Oberteil aufweisen. Um einen stirnseitigen, berührungssicheren Abschluss zu erhalten, ist eine stirnseitige Abdeckung 56 vorgesehen, die mit einem oberen Bereich auch einen seitlich angeordneten Sammelschienenhalter 53 überragt.

Der Sammelschienenträger mit darin angeordneten Sammelschienen 55 und der Abdeckung sowie den Geräteadaptern wird bei der Verteilschienenanordnung 50 auf den Montageplatten 40 vertikal durch mehrere Funktionsräume verlaufend angebracht, wie vorstehend beschrieben. Entsprechend kann für die Hauptschienenanordnung 80 der Sammelschienenträger 54 mit den Sammelschienen horizontal im hinteren Innenraumbereich montiert werden. Die Verbindung zwischen Hauptschienen und Verteilschienen 55 erfolgt mit lamellierten Kupferschienen und Anschlussklemmen oder Bolzen oder auch mittels flexibler Leiter und Anschlusselementen. Zum Herstellen der Verbindung sind neben vollständig geschlossenen Montageplatten auch Montageplatten mit Aussparungen für die Durchführung vorgesehen. Die Durchführungen sind mit Kabeltüllen und/oder Isolierstoff verschlossen.

Fig. 19 zeigt eine einzeln auf einer isolierenden Einzelaufnahme 58 aufgenommene Sammelschiene 55, die mit einer Einzelabdeckung 51' berührungssicher abgedeckt ist. Die Einzelaufnahme ist hierbei ebenfalls an seitlichen Haltestrukturen der Einzelaufnahme 58 mit auf der Innenseite von Seitenabschnitten angeordneten Gegenstrukturen rastend aufgesetzt und besitzt auf der Innenseite Stützmittel, um die Sammelschiene 55 auf abgestuften Aufnahmeelementen zu fixieren.

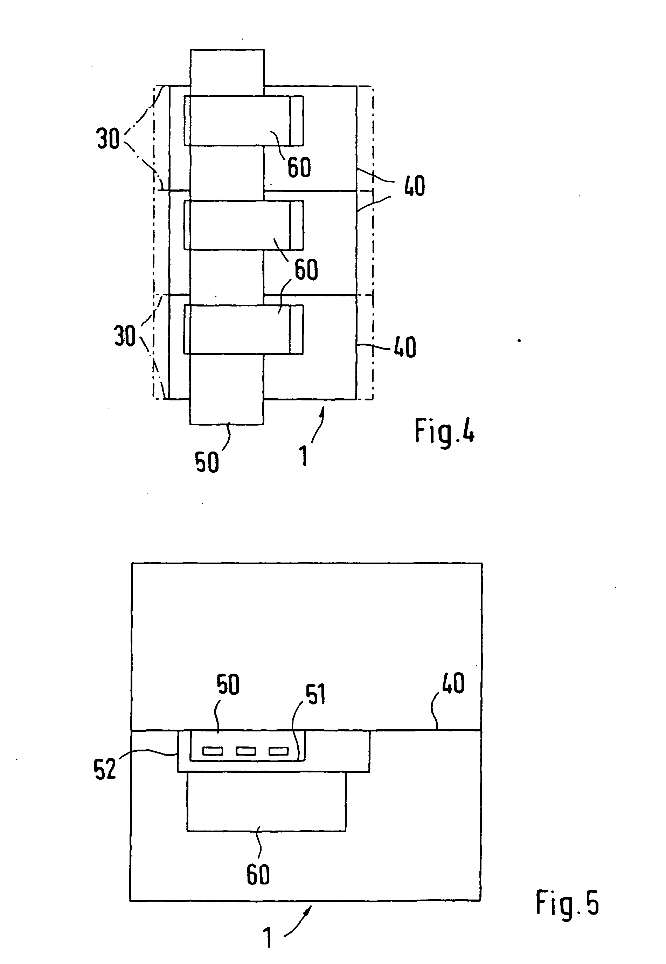

Fig. 20 zeigt eine ähnliche Darstellung wie Fig. 5, wobei jedoch zusätzlich ein seitlich neben den Funktionsräumen 5 angeordneter Teilraum, beispielsweise Kabelrangierraum, sowie die vertikalen Rahmenschenkel 11 mit der inneren und äußeren Montageebene dargestellt sind. Auch eine Verbindung 52.1 zwischen der Gerätekomponente 60 und dem Geräteadapter 52 ist eingezeichnet. Ferner ist der auf der Montageplatte 40 montierte Sammelschienenträger 54 mit den darauf festgelegten Sammelschienenhaltern 53 dargestellt, wie auch in Fig. 16 gezeigt. Auf der Montageplatte ist des Weiteren ein Teilsystem der Verteilschienen mit zwei Verteilschienen 55 angeordnet.

Der beschriebene modulare Aufbau für die Teilräume im Inneren des Schaltschrankes lässt eine variable Gestaltung bei einfacher Montage zu, wobei auch hohe Anforderungen an die Funktionssicherheit erfüllt werden, wie sie bei Niederspannungsanlagen gefordert sind.

## Patentansprüche

1. Schaltschrankanordnung mit mindestens einem Schaltschrank (2, 3, 4), der mittels Wandabschnitte in mehrere quaderförmige Teilräume (5) einschließlich Funktionsräumen unterteilt oder unterteilbar ist, wozu vertikale Wandabschnitte mit horizontaler Unterteilung vorgesehen sind, und bei dem zur Stromführung eine Sammelschienenanordnung einschließlich einer Verteilschienenanordnung (50) vorhanden ist, um Gerätekomponenten elektrische Energie zuzuführen, die in den von der Frontseite her zugänglichen Funktionsräumen angeordnet sind, wobei Verteilsammelschienen (55) der Verteilschienenanordnung (50) durch mehrere vertikal übereinander angeordnete und durch horizontale Raumteilerböden (30) voneinander getrennte Funktionsräume geführt und in deren Innenraum montiert und berührungssicher abgedeckt sind, **dadurch gekennzeichnet,**
**dass** im rückwärtigen Randbereich der Raumteilerböden (30) Ausschnitte (32) angeordnet sind, durch die die Verteilsammelschienen (55) geführt sind, und dass die Ausschnitte (32) an die Ausdehnung des Bereiches der Verteilsammelschienen (55) in Breiten- und Tiefenrichtung samt berührungssicherer Abdeckung (51, 51') angepasst sind.

2. Schaltschrankanordnung nach Anspruch 1,
**dadurch gekennzeichnet,**
**dass** die Funktionsräume als Montageplatten (40) ausgebildete Rückwände aufweisen, die von einer Rückwand des betreffenden Schaltschrankes (2, 3, 4) beabstandet sind, um im hinteren Innenraumbereich des Schaltschrankes einen Aufnahmeraum für eine Hauptschienenanordnung (80) der Sammelschienenanordnung zu bilden, in dem Hauptsammelschienen montiert sind, die mit den Verteilsammelschienen (55) elektrisch verbunden sind.

3. Schaltschrankanordnung nach Anspruch 2,
**dadurch gekennzeichnet,**
**dass** gleich oder verschieden hohe Montageplatten (40) vorgesehen sind, deren Abmessung in Höhe und Breite an die Höhe und Breite der Funktionsräume angepasst sind.

4. Schaltschrankanordnung nach einem der vorhergehenden Ansprüche,
**dadurch gekennzeichnet,**
**dass** die Teilräume seitlich von an die Funktionsraumhöhe angepassten Seitenwandabschnitten (20) abgeschlossen sind.

5. Schaltschrankanordnung nach einem der vorhergehenden Ansprüche,
**dadurch gekennzeichnet,**
**dass** die Verteilschienenanordnung (50) in einem wannenartigen Träger (54) mit entlang der vertikalen Ränder verlaufenden Haltestegen (54.1) aufgenommen und mit horizontal verlaufenden Sammelschienenhaltern (53) festgelegt sind und
**dass** die von vorne aufgesetzten Abdeckungen (51) mit Schnappelemente aufweisenden Seitenteilen (51.1) an den Haltestegen (54.1) arretiert sind.

6. Schaltschrankanordnung nach einem der Ansprüche 2 bis 5,
**dadurch gekennzeichnet,**
**dass** die Verbindung zwischen den Hauptsammelschienen und den Verteilsammelschienen (55) mittels lamellierter Kupferschienen und Anschlussklemmen, mittels Bolzen oder mittels flexibler Leiter und Anschlussklemmen hergestellt ist,
**dass** Montageplatten mit Aussparungen für die Durchführung der Kupferschienen oder flexiblen Leiter vorgesehen sind und
**dass** die Aussparungen mittels Kabeltüllen oder Isolierstoff verschlossen sind.

7. Schaltschrankanordnung nach einem der vorhergehenden Ansprüche,
**dadurch gekennzeichnet,**
**dass** zur Aufnahme der Raumteilerböden (30) seitlich in Tiefenrichtung verlaufende Montagewinkel (70) mittels vertikaler Schenkel an den vertikalen Rahmenschenkeln (11) und/oder den Seitenwandabschnitten (20) und gegebenenfalls an vertikalen Montageschienen angebracht sind, wobei die Raumteilerböden (30) auf horizontalen gegeneinander gerichteten Schenkeln zweier in gleicher Höhe sich gegenüberliegender Montagewinkel (70) angebracht sind.

8. Schaltschrankanordnung nach Anspruch 7,
**dadurch gekennzeichnet,**
**dass** die horizontalen Schenkel der Montagewinkel (70) über die gegeneinander gerichteten Innenseiten der vorderen vertikalen Rahmenschenkel (11) nach innen vorragen und
**dass** die Breite der Raumteilerböden (30) höchstens dem lichten Abstand der Innenseiten der vorderen vertikalen Rahmenschenkel (11) entspricht.

9. Schaltschrankanordnung nach einem der vorhergehenden Ansprüche,
**dadurch gekennzeichnet,**
**dass** die Funktionsräume frontseitig mit an ihre Höhe angepassten Teiltüren (16) versehen sind und/oder
**dass** eine sich über alle Funktionsräume frontseitig erstreckende Fronttür angebracht ist.

10. Schaltschrankanordnung nach einem der Ansprüche 7 bis 9,
**dadurch gekennzeichnet,**
**dass** die Höhen der Seitenwandabschnitte (20), der Montageplatten (40) und gegebenenfalls der Teiltüren (16) auf ein Rastermaß von Befestigungslochreihen der vertikalen Rahmenschenkel (11) und/oder der vertikalen Montageschienen abgestimmt sind.

## Claims

1. Control cabinet arrangement comprising at least one control cabinet (2, 3, 4) which is subdivided, or can be subdivided, into a plurality of cuboid compartments (5), including functional compartments, by means of wall sections, for which purpose vertical wall sections with a horizontal subdivision are provided, and in which a busbar arrangement, including a distributing busbar arrangement (50), is provided for conducting current in order to supply electrical energy to appliance components which are arranged in the functional compartments accessible from the front side, with distribution busbars (55) of the distributing busbar arrangement (50) being guided through a plurality of vertical functional compartments arranged one above the other and separated by horizontal partition bases (30) and being mounted inside said compartments and covered so as to be shockproof, **characterised by** the fact that openings (32) are disposed in the rear edge region of the partition bases (30) through which the distribution busbars (55) are guided, and that the openings (32) are adapted to match the extension of the region of the distribution busbars (55) in both depth and width together with the shockproof cover guard (51, 51').

2. Control cabinet arrangement according to Claim 1, **characterised by** the fact that the functional compartments as mounting plates (40) exhibit shaped backplanes that are disposed at a distance from a rear wall of the control cabinet concerned (2, 3, 4) so as to create a space in the rear interior area of the control cabinet to receive a main busbar arrangement (80) of the busbar arrangement, in which main busbars which are connected electrically to the distribution busbars (55) are installed.

3. Control cabinet arrangement according to Claim 2,
**characterised by** the fact
that mounting plates (40) of equal or different height are provided, their height and width being dapted to match the height and width of the functional compartments.

4. Control cabinet arrangement according to one of the foregoing claims, **characterised by** the fact
that the compartments are laterally terminated by side panel sections (20) matching the height of the compartment.

5. Control cabinet arrangement according to one of the foregoing claims, **characterised by** the fact
that the distributing busbar arrangement (50) is accommodated in a tray-like carrier (54) with support bars (54.1) running along the vertical edges and secured with horizontally disposed busbar supports (53) and
that the covers (51) mounted from the front are locked in position on the support bars (54.1) with side parts (51.1) that exhibit snap elements.

6. Control cabinet arrangement according to one of Claims 2 to 5, **characterised by** the fact
that the connection between the main busbars and the distribution busbars (55) is achieved by means of laminated copper bars and connection terminals, by means of studs or by means of flexible conductors and connection terminals,
that mounting plates are provided with recesses to allow the passage of the copper bars or flexible conductors and that the recesses are sealed by means of grommets or insulating material.

7. Control cabinet arrangement according to one of the foregoing claims, **characterised by** the fact
that to receive the partition bases (30), mounting brackets (70) that run laterally from front to rear are mounted by means of vertical legs onto the vertical frame legs (11) and/or the side panel sections (20) and if necessary onto vertical support rails, wherein the partition bases (30) are fitted on horizontal legs that point towards each other of two mounting brackets (70) that lie opposite one another on the same level.

8. Control cabinet arrangement according to Claim 7, **characterised by** the fact that the horizontal legs of the mounting brackets (70) project inward over the mutually facing inner sides of the front vertical frame legs (11), and
that the width of the partition bases (30) does not exceed the clearance between the inner sides of the front vertical frame legs (11).

9. Control cabinet arrangement according to one of the foregoing claims, **characterised by** the fact
that the functional compartments are provided at the front with part-doors (16) that match their height, and/or
that a single door extending over the front of all functional compartments is fitted.

10. Control cabinet arrangement according to one of Claims 7 to 9,
**characterised by** the fact
that the heights of the side panel sections (20), of the mounting plates (40) and as the case may be of the part-doors (16) are matched to a grid pattern of rows of mounting holes of the vertical frame legs (11) and/or of the vertical mounting rails.

## Revendications

1. Ensemble d'armoire électrique, avec au moins une armoire électrique (2, 3, 4) qui est divisée ou peut être divisée au moyen de parties de parois en plusieurs espaces partiels parallélépipédiques (5), y compris des espaces fonctionnels, des parties de parois verticales à subdivision horizontale étant prévues à cet effet, et dans lequel est présent pour l'alimentation électrique un ensemble de barres collectrices comprenant un ensemble de barres de distribution (50), afin d'alimenter en énergie électrique des composants d'appareillage qui sont disposés dans les espaces fonctionnels accessibles par le côté avant, sachant que des barres collectrices de distribution (55) de l'ensemble de barres de distribution (50) sont dirigées à travers plusieurs espaces fonctionnels verticalement superposés et mutuellement séparés par des fonds horizontaux de division d'espace (30), et sont montées dans l'espace intérieur de ces espaces et y sont protégées des contacts physiques par recouvrement,
**caractérisé en ce que** des découpures (32), à travers lesquelles sont dirigées les barres collectrices de distribution (55), sont disposées dans la région de bord arrière des fonds de division d'espace (30), et **en ce que** les découpures (32) sont adaptées à l'étendue en largeur et en profondeur de la zone des barres collectrices de distribution (55), y compris le recouvrement (51, 51') à l'épreuve des contacts physiques.

2. Ensemble d'armoire électrique selon la revendication 1, **caractérisé en ce que** les espaces fonctionnels présentent des parois arrière conçues comme plaques de montage (40), qui sont distantes d'une paroi arrière de l'armoire électrique concernée (2, 3, 4), afin de former dans la zone arrière de l'espace intérieur de l'armoire électrique un espace récepteur pour un ensemble de barres principales (80) de l'ensemble de barres collectrices, espace dans lequel sont montées des barres collectrices principales qui sont électriquement reliées aux barres collectrices de distribution (55).

3. Ensemble d'armoire électrique selon la revendication 2, **caractérisé en ce qu'**il est prévu des plaques de montage (40) de même hauteur ou de hauteurs différentes, dont les dimensions de hauteur et de largeur sont adaptées à la hauteur et à la largeur des espaces fonctionnels.

4. Ensemble d'armoire électrique selon l'une des revendications précédentes, **caractérisé en ce que** les espaces partiels sont fermés sur les côtés par des parties de parois latérales (20) adaptées à la hauteur des espaces fonctionnels.

5. Ensemble d'armoire électrique selon l'une des revendications précédentes, **caractérisé en ce que** l'ensemble de barres de distribution (50) est reçu dans un support du genre cuvette (54) avec des bordures de maintien (54.1) s'étendant le long des bords verticaux, et est fixé en position par des fixations de barres collectrices (53) s'étendant horizontalement, et **en ce que** les recouvrements (51) installés par l'avant sont assujettis sur les bordures de maintien (54.1) par des parties latérales (51.1) présentant des éléments d'enclenchement.

6. Ensemble d'armoire électrique selon l'une des revendications 2 à 5, **caractérisé en ce que** la liaison entre les barres collectrices principales et les barres collectrices de distribution (55) est réalisée au moyen de barres en cuivre lamellaires et de bornes de connexion, au moyen de boulons ou au moyen de conducteurs souples et de bornes de connexion, **en ce qu'**il est prévu des plaques de montage pourvues d'évidements pour le passage des barres en cuivre ou des conducteurs souples, et **en ce que** les évidements sont fermés au moyen de passe-câbles ou de matériau isolant.

7. Ensemble d'armoire électrique selon l'une des revendications précédentes, **caractérisé en ce que**, pour recevoir les fonds de division d'espace (30), des cornières de montage (70) s'étendant sur les côtés dans le sens de la profondeur sont installées au moyen de branches verticales sur les branches de cadre verticales (11) et/ou sur les parties de parois latérales (20) et le cas échéant sur des rails de montage verticaux, les fonds de division d'espace (30) étant installés sur les branches horizontales en vis-à-vis de deux cornières de montage (70) se faisant face à la même hauteur.

8. Ensemble d'armoire électrique selon la revendication 7, **caractérisé en ce que** les branches horizontales des cornières de montage (70) dépassent vers l'intérieur par rapport aux côtés intérieurs en vis-à-vis des branches de cadre verticales avant (11), et **en ce que** la largeur des fonds de division d'espace (30) correspond au plus à l'écartement entre les côtés intérieurs des branches de cadre verticales avant (11).

9. Ensemble d'armoire électrique selon l'une des revendications précédentes, **caractérisé en ce que** les espaces fonctionnels sont pourvus à l'avant de portes partielles (16) adaptées à leur hauteur, et/ou **en ce qu'**une porte avant s'étendant sur le côté avant sur tous les espaces fonctionnels est mise en place.

10. Ensemble d'armoire électrique selon l'une des revendications 7 à 9, **caractérisé en ce que** les hauteurs des parties de parois latérales (20), des plaques de montage (40) et le cas échéant des portes partielles (16) sont adaptées à une dimension de quadrillage de rangées de trous de fixation des branches de cadre verticales (11) et/ou des rails de montage verticaux.
